# EUROPÄISCHE PATENTSCHRIFT

(11) **EP 4 256 215 B1**
(45) Veröffentlichungstag und Bekanntmachung des Hinweises auf die Patenterteilung: **16.07.2025**
(21) Anmeldenummer: 21820499.8
(22) Anmeldetag: 25.11.2021
(51) Int. Cl.: F16G 11/12

(54) **KOPPELANORDNUNG**
COUPLING ARRANGEMENT
AGENCEMENT D'ACCOUPLEMENT

(30) Priorität: 02.12.2020 DE 102020215229
(43) Veröffentlichungstag der Anmeldung: 11.10.2023
(73) Patentinhaber: SACS Aerospace GmbH, 72186 Empfingen (DE)
(72) Erfinder: BLANK, Eugen, 78662 Bösingen (DE); MOSER, Roland, 72364 Obernheim (DE)
(74) Vertreter: Patentanwälte Magenbauer & Kollegen Partnerschaft mbB
(86) Internationale Anmeldenummer: PCT/EP2021/082943
(87) Internationale Veröffentlichungsnummer: WO 2022/117423

(56) Entgegenhaltungen:
- EP-A2- 2 378 158
- WO-A1-2009/140893
- DE-C- 592 029

## Beschreibung

Die Erfindung betrifft eine Koppelanordnung zur Verbindung von Bauelementen, mit einem ersten Koppelteil, das zur Festlegung an einem ersten Bauelement ausgebildet ist, und mit einem zweiten Koppelteil, das zur Festlegung an einem zweiten Bauelement ausgebildet ist, wobei ein Endabschnitt des ersten Koppelteils mit einem längs einer Gewindeachse erstreckten Innengewinde versehen ist und wobei ein Endabschnitt des zweiten Koppelteils mit einem längs der Gewindeachse erstreckten Außengewinde versehen ist, das in das Innengewinde des ersten Koppelteils eingeschraubt ist.

Aus der EP 3 647 607 A1 ist eine Koppeleinrichtung zur kraftübertragenden Kopplung zweier Komponenten bekannt. Die bekannte Koppeleinrichtung umfasst ferner ein erstes Koppelteil mit einer ersten Koppelschnittstelle, ein zweites Koppelteil mit einer zweiten Koppelschnittstelle sowie eine Koppelstange, die mit einem ersten Endbereich drehbeweglich um eine Drehachse mit dem ersten Koppelteil und mit einem zweiten Endbereich drehbeweglich um die Drehachse mit dem zweiten Koppelteil verbunden ist, wobei der erste Endbereich und das erste Koppelteil eine erste Gewindeanordnung für eine Einstellung eines Abstands zwischen dem ersten Koppelteil und dem zweiten Koppelteil bilden und wobei vorgesehen ist, dass der ersten Gewindeanordnung eine erste Bremseinrichtung zugeordnet ist, die für eine, insbesondere ausschließlich, reibschlüssige Bremsmomentübertragung zwischen dem ersten Koppelteil und dem ersten Endbereich ausgebildet ist.

Aus der DE 592 029 ist ein Spannschloss für Drahtzüge bekannt, das aus einer rohrförmigen, mit Rechts- und Linksgewinde versehenen Spannmutter und aus zwei in diese mit Endgewinde eingreifenden Zugspindeln besteht, wobei Spindelführungen vorgesehen sind, die einen Fettraum der Spannmutter abschließen und zugleich das Spannschloss gegen selbsttätiges Lösen sichern, wobei die Spindelführungen aus stopfbüchsenartigen, auf den Zugspindeln festklemmbaren Verschraubungen gebildet sind.

Die Aufgabe der Erfindung besteht darin, eine Koppelanordnung mit vereinfachtem Aufbau bereitzustellen.

Diese Aufgabe wird für eine Koppelanordnung der eingangs genannten Art mit den Merkmalen des Anspruchs 1 gelöst.

Die Aufgabe der Klemmhülse besteht darin, in Abhängigkeit von einer relativen Rotationsstellung der Klemmhülse gegenüber dem Endabschnitt des ersten Koppelteils eine reibschlüssige Festlegung des mit dem Außengewinde versehenen Endabschnitts des zweiten Koppelteils am ersten Koppelteil zu gewährleisten. Hierbei ist vorgesehen, dass die zueinander korrespondierenden Riegelgeometrien, die an der Innenoberfläche der Klemmhülse und an der Außenoberfläche des Endabschnitts des ersten Koppelteils vorgesehen sind, eine von einem Verdrehwinkel zwischen Klemmhülse und Endabschnitts des ersten Koppelteils abhängige Einstellung von radial nach innen wirkenden Kräften, die von der Klemmhülse auf den Endabschnitt des ersten Koppelteils und von dort auf den mit dem Außengewinde versehenen Endabschnitt des zweiten Koppelteils ausgeübt werden, ermöglicht. Durch diese radial nach innen wirkenden Kräfte, die auch als Normalkräfte bezeichnet werden können, werden Reibkräfte zwischen dem am Endabschnitt des ersten Koppelteils ausgebildeten Innengewinde und dem mit dem Außengewinde versehenen Endabschnitt des zweiten Koppelteils hervorgerufen, die in einer Umfangsrichtung des Außengewindes wirken und die die gewünschte Festlegung des zweiten Koppelteils am ersten Koppelteil gewährleisten.

Für die Bereitstellung dieser radial nach innen gerichteten Normalkräfte weisen die Innenoberfläche der Klemmhülse und die Außenoberfläche des Endabschnitts des ersten Koppelteils, die sich unmittelbar gegenüberliegen, jeweils Riegelgeometrien auf, die derart aufeinander abgestimmt sind, dass bei einer rotatorischen Relativbewegung der Klemmhülse um die Gewindeachse gegenüber dem Endabschnitt des ersten Koppelteils in Abhängigkeit von der gewählten Rotationsrichtung eine Vergrößerung oder Verkleinerung der Normalkräfte auftritt. Bevorzugt sind die Riegelgeometrien derart gewählt, dass eine gezielte, beispielsweise in vorgegebenen Stufen erfolgende, insbesondere stufenlose, Einstellung des im Ergebnis zwischen dem ersten Koppelteil und dem zweiten Koppelteil wirkenden Reibmoments ermöglicht wird.

Eine Abweichung der jeweiligen Riegelgeometrie von einer Kreisgeometrie kann wahlweise durch einen radial nach innen oder nach außen abragenden Vorsprung oder durch eine in radialer Richtung nach innen oder nach außen erstreckte Ausnehmung verwirklicht werden.

Vorzugsweise ist die Klemmhülse derart dimensioniert, dass sie bei einem bestimmungsgemäßen Gebrauch keine nennenswerte elastische oder gar plastische Deformation erfährt. Besonders bevorzugt ist vorgesehen, dass an einer Außenoberfläche der Klemmhülse jeweils paarweise ausgebildete Planflächen, die auch als Schlüsselflächen bezeichnet werden, verwirklicht sind, die ein Einleiten eines Drehmoments zur Einstellung der rotatorischen Relativposition der Klemmhülse gegenüber dem Endabschnitt des ersten Koppelteils mit einem geeigneten Werkzeug, insbesondere einem Gabelschlüssel, durch einen Benutzer erlauben. Insbesondere ist vorgesehen, dass am Endabschnitt des ersten Koppelteils benachbart oder beabstandet zur Klemmhülse ebenfalls Schlüsselflächen vorgesehen sind, so dass mit einem geeigneten Werkzeug, insbesondere einem Gabelschlüssel, ein Haltemoment von einem Benutzer ausgeübt werden kann, wenn eine Einstellung der rotatorischen Relativposition der Klemmhülse gegenüber dem Endabschnitt des ersten Koppelteils vorgenommen wird. Alternativ kann vorgesehen sein, dass am Endabschnitt und an der Klemmhülse jeweils Griffflächen ausgebildet sind, die eine manuelle und werkzeuglose Verstellung der Klemmhülse ermöglichen. Bevorzugt ist vorgesehen, dass diese Griffflächen mit einer rutschhemmenden Beschichtung wie beispielsweise einer Gummierung versehen sind.

Zweckmäßig ist es, wenn das erste Koppelteil einen Stangenabschnitt und einen Verbindungsabschnitt aufweist, wobei der Endabschnitt des ersten Koppelteils am Verbindungsabschnitt ausgebildet ist und wobei der Verbindungsabschnitt mit einem Außengewinde in ein Innengewinde des Stangenabschnitts eingeschraubt ist. Hierdurch wird ein modularer Aufbau der Koppelanordnung verwirklicht, bei dem eine Anpassung der Geometrie, insbesondere einer Gesamtlänge, der Koppelanordnung durch Austausch des Stangenabschnitts verwirklicht werden kann. Der Verbindungsabschnitt und das zweite Koppelteil sind hierbei unabhängig von der Geometrie der Koppelanordnung und können somit jeweils als Gleichteile für die unterschiedlichen Gestaltungen der Koppelanordnung bereitgestellt werden.

Der Stangenabschnitt kann wahlweise aus einem Vollmaterial oder aus einem Rohr hergestellt werden und ist endseitig mit dem Innengewinde zur Aufnahme des Außengewindes des Verbindungsabschnitts versehen.

Erfindungsgemäß ist vorgesehen, dass an der Innenoberfläche der Klemmhülse wenigstens zwei Riegelgeometrien ausgebildet sind und dass an der Außenoberfläche des Endabschnitts des ersten Koppelteils wenigstens zwei Riegelgeometrien ausgebildet sind, wobei die Riegelgeometrien derart angeordnet sind, dass in einer ersten Funktionsstellung der Klemmhülse gegenüber dem Endabschnitt des ersten Koppelteils nur eine der Riegelgeometrien der Klemmhülse in Eingriff mit einer der Riegelgeometrien des Endabschnitts steht und wenn in einer zweiten Funktionsstellung der Klemmhülse gegenüber dem Endabschnitt des ersten Koppelteils die wenigstens zwei Riegelgeometrien der Klemmhülse in Eingriff mit den wenigstens zwei Riegelgeometrien des Endabschnitts stehen. Beispielhaft kann vorgesehen sein, dass drei oder mehr Riegelgeometrien vorgesehen sind, wobei vorzugsweise auch hier eine versetzte Anordnung der wenigstens drei Riegelgeometrien verwirklicht wird, um wie auch bei den zwei Riegelgeometrien einen kaskadierten Eingriff der einzelnen Riegelgeometrien im Zuge der Relativbewegung zwischen der Klemmhülse und dem Endabschnitt zu gewährleisten.

Für eine vorteilhafte Einstellung der in radialer Richtung nach innen wirkenden Kräfte, die auch als Klemmkräfte oder Normalkräfte bezeichnet werden, kann eine zumindest im Wesentlichen proportionale Beziehung zwischen einem Verdrehwinkel, die die Klemmhülse gegenüber dem Endabschnitt des ersten Koppelteils einnimmt und den daraus resultierenden, radial nach innen wirkenden Kräften vorgesehen sein. Dies kann beispielsweise durch eine Gestaltung der Riegelgeometrien als gekrümmt ausgebildete Keile verwirklicht werden, wobei hier für den Fall einer vollflächigen Anlage der sich gegenüberliegenden Riegelgeometrien möglicherweise hohe Reibkräfte zwischen Klemmhülse und dem Endabschnitt des ersten Koppelteils auftreten. Bevorzugt ist daher vorgesehen, dass die Riegelgeometrien in einer Umfangsrichtung der Innenoberfläche der Klemmhülse sowie in einer Umfangsrichtung der Außenoberfläche des Endabschnitts des ersten Koppelteils so angeordnet sind, dass in einer Freigabestellung keine nennenswerten Klemmkräfte oder Normalkräfte von der Klemmhülse auf den Endabschnitt des ersten Koppelteils ausgeübt werden. Bei einer rotatorischen Relativbewegung zwischen Klemmhülse und dem Endabschnitt des ersten Koppelteils in eine erste Funktionsstellung gelangt zunächst nur eine der Riegelgeometrien der Klemmhülse in eine Wirkverbindung mit der korrespondierenden Riegelgeometrie des Endabschnitts des ersten Koppelteils, wodurch eine zumindest bereichsweise elastische Deformation des Endabschnitts des ersten Koppelteils hervorgerufen wird. Diese elastische Deformation führt zur Bereitstellung einer radial nach innen gerichteten Normalkraft oder Klemmkraft und dadurch zur Bereitstellung eines ersten Reibmoments zwischen dem ersten Koppelteil und dem zweiten Koppelteil. Erfolgt anschließend eine weitere rotatorische Relativbewegung zwischen der Klemmhülse und dem Endabschnitt des ersten Koppelteils aus der ersten Funktionsstellung in eine zweite Funktionsstellung, so gelangt auch die zweite Paarung von Riegelgeometrien der Klemmhülse und des Endabschnitts des ersten Koppelteils in Wirkverbindung, wodurch eine zusätzliche, bereichsweise elastische Deformation des Endabschnitts des ersten Koppelteils hervorgerufen wird. Dementsprechend erhöhen sich die in radialer Richtung nach innen vom ersten Koppelteil auf das zweite Koppelteil wirkenden Normalkräfte und damit auch das Reibmoment zwischen dem ersten Koppelteil und dem zweiten Koppelteil. Je nach Ausgestaltung der Klemmhülse und des Endabschnitts des ersten Koppelteils können weitere Paarungen von Riegelgeometrien vorgesehen sein, die vorzugsweise derart angeordnet sind, dass ausgehend von der zweiten Funktionsstellung durch weitere rotatorische Relativbewegungen zwischen der Klemmhülse und dem Endabschnitt des ersten Koppelteils jeweils eine zusätzliche Steigerung der Reibung zwischen dem ersten Koppelteil und dem zweiten Koppelteil hervorgerufen werden kann.

Bevorzugt sind die Paarungen der Riegelgeometrien derart ausgebildet, dass sie nach Eintreten der Wirkverbindung in der jeweiligen Funktionsposition nicht zu einem weiteren Anwachsen der jeweils ausgeübten Klemmkräfte oder Normalkräfte führen, wenn die Klemmhülse aus der jeweiligen Funktionsposition in Richtung der nächsten Funktionsposition oder Funktionspositionen verschwenkt wird. Dies geht insbesondere mit einem stufenweisen Ansteigen der Klemmkräfte bei der Rotation der Klemmhülse gegenüber dem Endbereich des ersten Koppelteils einher.

Bei einer Weiterbildung der Erfindung ist vorgesehen, dass die Riegelgeometrien an der Innenoberfläche der Klemmhülse als, vorzugsweise jeweils mit gleicher Winkelerstreckung ausgebildete, insbesondere in gleicher Winkelteilung verteilte, radial nach innen abragende Riegelvorsprünge ausgebildet sind. Beispielhaft ist vorgesehen, dass die Innenoberfläche der Klemmhülse kreiszylindrisch ausgebildet ist und dass die Riegelvorsprünge jeweils radial nach innen ausgerichtete Riegelflächen aufweisen. Diese Riegelflächen können als Planflächen oder als konvexe Flächen oder als konkave Flächen ausgebildet sein. Besonders bevorzugt ist vorgesehen, dass die Riegelvorsprünge in der Art von kurzen Kreisringabschnitten an der Innenoberfläche ausgebildet sind und die als Kreismantelabschnitt oder als Kegelmantelabschnitt ausgebildeten Riegelflächen einen Innendurchmesser bestimmen, der kleiner als ein Innendurchmesser der Innenoberfläche der Klemmhülse ausgebildet ist.

Exemplarisch ist vorgesehen, dass eine Winkelerstreckung der Riegelvorsprünge, die an der Innenoberfläche der Klemmhülse ausgebildet sind, für alle Riegelvorsprünge, die an der Innenoberfläche der Klemmhülse ausgebildet sind, identisch ist. Dies bedeutet, dass bei einer Betrachtung der Riegelvorsprünge in einer Umfangsrichtung der Innenoberfläche ein in diese Richtung zu ermittelnder und auf die Mittelachse der Klemmhülse bezogener Winkel zwischen einem Startpunkt des jeweiligen Riegelvorsprungs und einem Endpunkt des jeweiligen Riegelvorsprungs für sämtliche Riegelvorsprünge identisch ist, wobei alternativ auch vorgesehen sein kann, dass einer oder mehrere der Riegelvorsprünge eine unterschiedliche Winkelerstreckung aufweisen. Ergänzend oder alternativ ist vorgesehen, dass die Riegelvorsprünge bezogen auf die Mittelachse der Klemmhülse in gleicher Winkelteilung angeordnet sind. Beispielsweise ist bei einer Verwirklichung von drei Riegelvorsprüngen eine Winkelteilung von 120 Grad vorgesehen. Eine Winkelerstreckung der Riegelvorsprünge kann beispielsweise 25 Grad betragen.

In weiterer Ausgestaltung der Erfindung ist vorgesehen, dass die Riegelgeometrien des Endabschnitts des ersten Koppelteils von Kreisringabschnitten oder von jeweils außenseitig in Richtung des Stangenabschnitts verjüngten Kegelringabschnitte bestimmt werden und mit einem Innengewinde zur Aufnahme des Endabschnitts des zweiten Koppelteils versehen sind. Vorzugsweise sind die Riegelgeometrien des Endabschnitts des ersten Koppelteils koaxial zueinander und koaxial zur Gewindeachse des Innengewindes ersten Koppelteils ausgerichtet.

Die Riegelgeometrien des Endabschnitts des ersten Koppelteils können beispielsweise dadurch erzeugt werden, dass der bereichsweise rohrförmig ausgebildete Endabschnitt des ersten Koppelteils mit längs der Gewindeachse erstreckten und in radialer Richtung ausgerichteten Schlitzen versehen wird, wobei durch diese Schlitze auch ein Deformationsverhalten für den Endabschnitt des ersten Koppelteils verbessert wird. Beispielhaft wird hierbei die Riegelgeometrie sowohl durch die Außenoberfläche des rohrförmig ausgebildeten Endabschnitts des ersten Koppelteils als auch durch die darin eingebrachten Schlitze bestimmt.

Um eine vorteilhafte axiale Festlegung für die Klemmhülse zu gewährleisten, kann es vorgesehen sein, dass die Riegelgeometrien des Endabschnitts des ersten Koppelteils jeweils als Kegelringabschnitte mit einem in Richtung des Stangenabschnitts verjüngten Querschnitt verwirklicht sind. In diesem Fall sind die Riegelflächen der Riegelvorsprünge und die Innenoberfläche der Klemmhülse vorzugsweise ebenfalls kegelmantelabschnittsförmig ausgebildet. Eine Montage der Klemmhülse auf den Endabschnitt des ersten Koppelteils erfolgt vor einem Einschraubvorgang des zweiten Koppelteils in das erste Koppelteil, so dass die Riegelgeometrien des Endabschnitts des ersten Koppelteils elastisch so weit deformiert werden können, das trotz ihrer kegelringförmigen Ausgestaltung die Klemmhülse aufgeschoben werden kann. Im Zuge eines nachfolgend vorgesehenen Einschraubvorgangs für das zweite Koppelteil in das erste Koppelteil wird durch den mit dem Außengewinde versehenen Endabschnitt des zweiten Koppelteils eine erneute elastische Deformation der Riegelgeometrien des Endabschnitts des ersten Koppelteils zumindest dahingehend unterbunden, dass die Klemmhülse vom Endabschnitts des ersten Koppelteils abgenommen werden kann.

Bevorzugt ist vorgesehen, dass die Riegelgeometrien des Endabschnitts des ersten Koppelteils jeweils unterschiedliche Winkelerstreckungen aufweisen. Hierdurch wird der gewünschte sequenzielle Eingriff der jeweils einander zugehörigen Riegelvorsprünge der Klemmhülse und des Endabschnitts des ersten Koppelteils bei einer relativen Rotationsbewegung zwischen Klemmhülse und erstem Koppelteil ermöglicht.

Vorteilhaft ist es, wenn die Riegelgeometrien an der Außenoberfläche des Endabschnitts des ersten Koppelteils als, vorzugsweise jeweils mit gleicher Winkelerstreckung ausgebildete, insbesondere in gleicher Winkelteilung verteilte, radial nach außen abragende Riegelvorsprünge ausgebildet sind. Hierbei handelt es sich um die kinematische Umkehr der nach innen abragenden Riegelvorsprünge an der Innenoberfläche der Klemmhülse. Dies gilt in gleicher Weise für die Ausgestaltung der Klemmhülse, bei der in diesem Fall vorgesehen sein kann, dass die Riegelgeometrien an der Innenoberfläche der Klemmhülse als Kreismantelabschnitte ausgebildet sind, zwischen denen längs der Gewindeachse ausgerichtete Nuten ausgebildet sind.

Darüber hinaus ist auch eine Kombination von nach innen abragenden Riegelvorsprüngen an der Innenoberfläche der Klemmhülse und von nach außen abragenden Riegelvorsprüngen an der Außenoberfläche des Endabschnitts des ersten Koppelteils möglich.

In weiterer Ausgestaltung der Erfindung ist vorgesehen, dass eine Stirnfläche einer Riegelgeometrie der Klemmhülse, insbesondere eines Riegelvorsprungs, und eine korrespondierende Stirnfläche einer Riegelgeometrie des Endabschnitts des ersten Koppelteils einen Endanschlag für eine Rotationsbewegung der Klemmhülse gegenüber dem Endabschnitt des ersten Koppelteils aus der ersten Funktionsstellung in eine Freigabestellung ausbilden. Hierdurch wird gewährleistet, dass bei einer Aufhebung der reibschlüssigen Verbindung zwischen dem ersten Koppelteil und dem zweiten Koppelteil die Freigabestellung zwischen der Klemmhülse und dem Endabschnitt des ersten Koppelteils zuverlässig und auch unter schwierigen Montagebedingungen eingestellt werden kann.

Zweckmäßig ist es, wenn am zweiten Koppelteil ein gabelförmiger Befestigungsabschnitt ausgebildet ist und wenn an einander entgegengesetzt angeordneten Endabschnitten des ersten Koppelteils jeweils ein zweites Koppelteil angeordnet ist. Hierdurch kann die Koppelanordnung beispielsweise als Zugstange zur Befestigung von Verkleidungsteilen oder anderen Komponenten in einem Flugzeugrumpf eingesetzt werden.

Eine vorteilhafte Ausführungsform der Erfindung ist in der Zeichnung dargestellt. Hierbei zeigt:
- Figur 1: eine perspektivische Darstellung eines Teilbereichs einer Koppelanordnung mit einem ersten Koppelteil und einem zweiten Koppelteil,
- Figur 2: eine Schnittdarstellung des Teilbereichs der Koppelanordnung gemäß der Figur 1,
- Figur 3: eine streng schematische Vorderansicht einer Klemmhülse,
- Figur 4: eine streng schematische Vorderansicht eines Verbindungsteils, und
- Figur 5: eine streng schematische Vorderansicht der am Verbindungsteil montierten Klemmhülse.

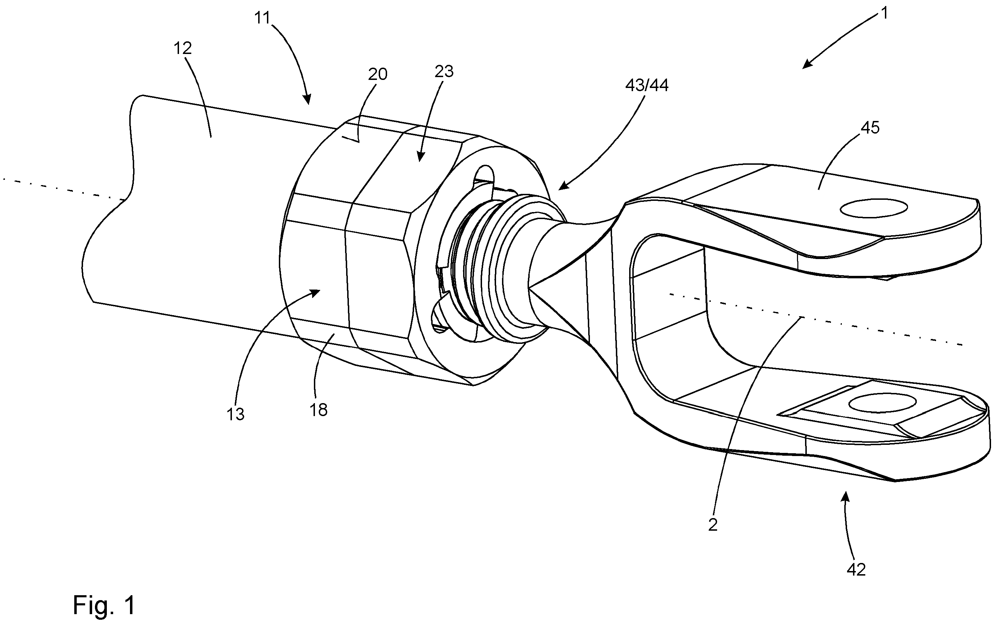

Eine in der Figur 1 nur bereichsweise gezeigte Koppelanordnung 1 umfasst rein exemplarisch ein erstes Koppelteil 11 sowie ein daran angebrachtes zweites Koppelteil 42. Exemplarisch kann an einem nicht dargestellten zweiten Endbereich der Koppelanordnung 1 die gleiche Kombination eines ersten Koppelteils und eines zweiten Koppelteils vorgesehen sein kann, womit die Koppelanordnung 1 beispielsweise als Zugstange zur Befestigung von Komponenten, beispielsweise Verkleidungsteilen, in einem nicht dargestellten Flugzeugrumpf eingesetzt werden kann.

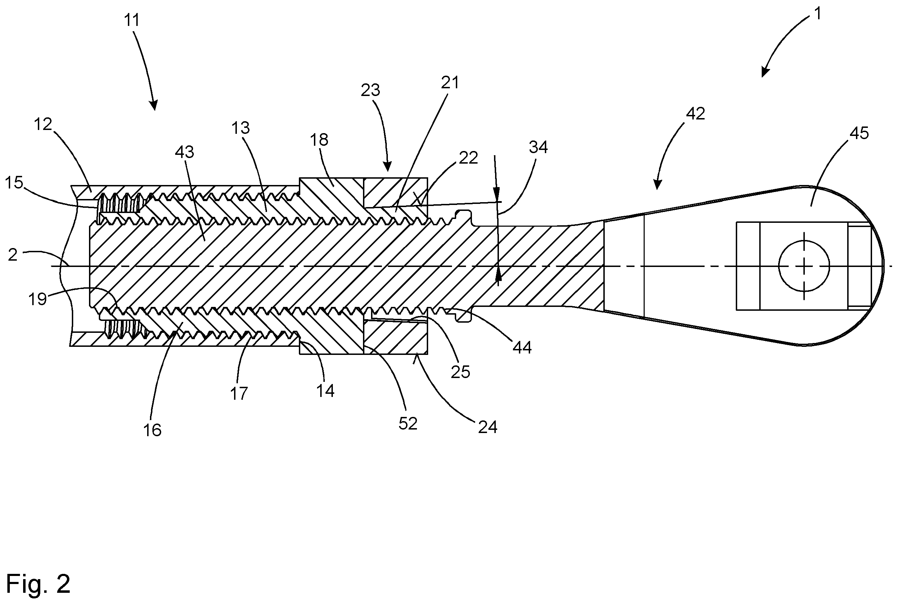

Das erste Koppelteil 11 umfasst gemäß der Darstellung der Figur 2 einen rein exemplarisch rohrförmig ausgebildeten Stangenabschnitt 12 und einen mit dem Stangenabschnitt 12 gekoppelten Verbindungsabschnitt 13. Beispielhaft ist vorgesehen, dass der Stangenabschnitt 12 ausgehend von einer Mündungsöffnung 14 längs einer Gewindeachse 2, bei der es sich vorzugsweise um die Mittelachse des Stangenabschnitts 12 handelt, mit einem Innengewinde 15 versehen ist. In dieses Innengewinde 15 ist ein Gewindeabschnitt 16 des Verbindungsabschnitts 13 eingeschraubt und weist zu diesem Zweck ein Außengewinde 17 auf, das sich längs der Gewindeachse 2 bis zu einem Abschlussbund 18 des Verbindungsabschnitts 13 erstreckt. Ferner ist der Verbindungsabschnitt 13 vollständig von einem Innengewinde 19 durchsetzt.

Der Abschlussbund 18 ist gemäß der Darstellung der Figur 1 in der Art einer Sechskantmutter profiliert und weist dementsprechend insgesamt drei jeweils parallel zueinander ausgerichtete Schlüsselflächenpaare auf, von denen aus Gründen der Übersichtlichkeit nur eines mit dem Bezugszeichen 20 versehen ist. An einem dem Außengewinde 17 abgewandten Endbereich des Verbindungsabschnitts 13 ist ein Endabschnitt 21 des ersten Koppelteils 11 ausgebildet. Wie der Darstellung der Figur 2 entnommen werden kann, ist der Endabschnitt 21 als Kegelabschnitt profiliert, wobei eine Verjüngung des Endabschnitts 21 in Richtung des Abschlussbunds 18 vorgesehen ist.

An einer Außenoberfläche 22 des Endabschnitts 21, die als Kegelmantelabschnitt mit einem Kegelwinkel 34, der rein exemplarisch 3 Grad beträgt, ausgebildet ist, ist eine Klemmhülse 23 drehbeweglich um die Gewindeachse 2 aufgenommen. Wie der Darstellung der Figur 1 entnommen werden kann, ist eine Außenoberfläche 24 der Klemmhülse 23 in der Art einer Sechskantmutter, insbesondere gleichartig wie der Abschlussbund 18, ausgebildet. Eine in der Figur 2 sichtbare Innenoberfläche 25 der Klemmhülse 23 ist an die Außenoberfläche 22 des Endabschnitts 21 angepasst und ebenfalls kegelabschnittsförmig profiliert.

Das zweite Koppelteil 42 umfasst rein exemplarisch einen Endabschnitt 43, der mit einem längs der Gewindeachse 2 erstreckten Außengewinde 44 versehen ist, wobei das Außengewinde 44 an das Innengewinde 19 im Verbindungsabschnitt 13 angepasst ist. Angrenzend an den Endabschnitt 44 ist das zweite Koppelteil 42 mit einer Verbindungsgabel 45 versehen, die für eine Festlegung des zweiten Koppelteils 42 an einem nicht näher dargestellten Befestigungsauge eines nicht dargestellten Bauelements, beispielsweise eines Verkleidungsteils eines Flugzeugs, ausgebildet ist.

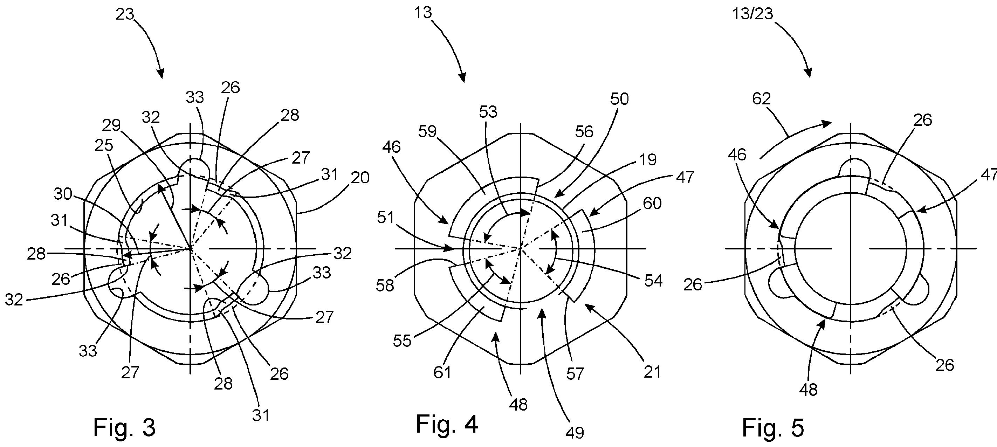

Wie der rein schematischen Darstellung der Klemmhülse 23 gemäß der Figur 3 entnommen werden kann, ist die Innenoberfläche 25 in der Art eines Kegelmantelabschnitts ausgebildet. Von der Innenoberfläche 25 ragen rein exemplarisch insgesamt drei als Riegelvorsprünge 26 ausgebildete Riegelgeometrien in radialer Richtung nach innen ab. Beispielhaft ist vorgesehen, dass die Riegelvorsprünge 26 jeweils in gleicher Winkelteilung, vorliegend einer Winkelteilung von 120 Grad angeordnet sind. Ferner ist rein exemplarisch vorgesehen, dass jeder der Riegelvorsprünge 26 eine Winkelerstreckung 27 aufweist, die identisch mit den Winkelerstreckungen 27 der anderen Riegelvorsprünge 26 ist und vorliegend rein beispielhaft 25 Grad beträgt.

Jeder der Riegelvorsprünge 26 weist eine radial innenliegende Riegelfläche 28 auf, die beispielhaft in gleicher Weise wie die Innenoberfläche 25 als Kegelmantelabschnitt ausgebildet ist. Beispielhaft ist vorgesehen, dass die Riegelfläche 28 einen Radius 30 aufweist, der nahezu über die gesamte Winkelerstreckung 27 konstant ist und lediglich in einem Übergangsbereich 31 an den Radius 29 der Innenoberfläche 25 angepasst ist. In der Darstellung der Figur 3 ist jeweils der größte Radius für die Innenoberfläche 25 und die Riegelfläche 28 eingezeichnet. Jeder der Riegelvorsprünge 26 weist eine in Umfangsrichtung ausgerichtete Stirnfläche 32 auf, die durch eine radial Ausnehmung 33 gebildet wird und die als Anschlagflächen für die korrespondierenden Riegelgeometrien des Verbindungsabschnitt 13 genutzt werden, wie dies nachstehend im Zusammenhang mit der Figur 5 ausgeführt wird.

Der in der Figur 4 schematisch dargestellte Verbindungsabschnitt 13 ist rein exemplarisch mit jeweils drei Riegelgeometrien 46, 47, 48 versehen. Diese Riegelgeometrien 46, 47, 48 können beispielsweise dadurch geschaffen werden, dass ein zunächst rohrförmig mit kegelabschnittsförmig ausgebildeter Außenoberfläche 22 hergestellter Endabschnitt 21 des Verbindungsabschnitts 13 mit Schlitzen 49, 50, 51 versehen wird, die sich ausgehend von einer in der Figur 2 bezeichneten Endfläche 52 des Verbindungsabschnitts 13 bis zum Abschlussbund 18 erstrecken. Dadurch verbleiben drei Kegelringabschnitte 59, 60, 61, die zusammen mit den Schlitzen 49, 50, 51 die Riegelgeometrien 46, 47, 48 bilden. Rein exemplarisch sind die Schlitze 49, 50, 51 derart ausgebildet, dass die dadurch gebildeten Riegelgeometrien 46, 47 und 48 jeweils unterschiedliche Winkelausdehnungen 53, 54, 55 aufweisen.

Durch diese unterschiedliche Gestaltung der Riegelgeometrien 46, 47 und 48 des Verbindungsabschnitts 13 sowie die gleichartige Gestaltung der Riegelvorsprünge 26 an der Klemmhülse 23 erreicht, dass bei einer rotatorischen Relativbewegung der Klemmhülse 23 gegenüber dem Verbindungsabschnitt 13 in der Rotationsrichtung 62 ausgehend von der in der Figur 5 dargestellten Freigabestellung zunächst nur eine der Riegelvorsprünge 26 in Wechselwirkung mit der korrespondierenden Riegelgeometrie 46 tritt. Die beiden anderen Riegelvorsprünge 26 treten hingegen aufgrund der unterschiedlichen Winkelausdehnung 53, 54, 55 der Riegelgeometrien 46, 47 und 48 zunächst nicht in Wirkverbindung mit der zugeordneten Riegelgeometrie 47 bzw. 48. Durch die Wirkverbindung des Riegelvorsprungs 26 mit der Riegelgeometrie 46 erfolgt eine Verdrängungsbewegung, bei der der Riegelvorsprung 26 die Riegelgeometrie 46 in radialer Richtung nach innen verlagert und dabei elastisch deformiert. Hierdurch wird von der Riegelgeometrie 46 eine radial nach innen gerichtete Druckkraft, die auch als Normalkraft oder Riegelkraft bezeichnet werden kann, auf das Außengewinde 44 des Endabschnitts 43 des zweiten Koppelteils 42 ausgeübt. Hierdurch werden Reibkräfte zwischen dem zweiten Koppelteil 42 und dem ersten Koppelteil 11 vergrößert, womit eine Bremswirkung für Relativbewegungen zwischen dem zweiten Koppelteil 42 und dem ersten Koppelteil 11 anwächst.

Bei einer weiteren rotatorischen Relativbewegung gelangen nach und nach auch die anderen Riegelvorsprünge 26 in Wirkverbindung mit den Riegelgeometrien 47 und 48, wodurch eine zusätzliche Krafteinleitung von der Klemmhülse 23 auf die Riegelgeometrien 47 und 48 und damit auch auf das Außengewinde 44 des Endabschnitts 43 des zweiten Koppelteils 42 erfolgt.

Sofern nach Festlegung des zweiten Koppelteils 42 am ersten Koppelteil 11 eine Relativbewegung zwischen dem zweiten Koppelteil 42 und dem ersten Koppelteil 11 durchgeführt werden soll, kann wahlweise die Blockierwirkung zwischen der Klemmhülse 23, dem Verbindungsabschnitt 13 und dem Außengewinde 44 beibehalten oder reduziert oder aufgehoben werden. Hierzu wird eine rotatorische Relativbewegung entgegen der in Figur 5 eingezeichneten Rotationsrichtung 62 auf die Klemmhülse 23 eingeleitet, die der rotatorischen Relativbewegung zur Bewirkung der Festlegung entgegengesetzt ist, so dass sequenziell oder kaskadiert die Wirkverbindung zwischen den Riegelvorsprüngen 26 und den Riegelgeometrien 48, 47 und 46 wieder aufgehoben wird. Um eine eindeutige rotatorische Relativposition für die Klemmhülse 23 in der Freigabestellung zu gewährleisten, sind die Riegelgeometrien 46, 47 und 48 derart auf die Riegelvorsprünge 26 abgestimmt, dass in der Freigabestellung eine formschlüssige Anlage von Seitenflächen der Kegelringabschnitte 59, 60, 61 an den Stirnflächen 32 der Riegelvorsprünge 26 gewährleistet ist, wie dies der Figur 5 zu entnehmen ist.

## Patentansprüche

1. Koppelanordnung (1) zur Verbindung von Bauelementen, mit einem ersten Koppelteil (11), das zur Festlegung an einem ersten Bauelement ausgebildet ist, und mit einem zweiten Koppelteil (42), das zur Festlegung an einem zweiten Bauelement ausgebildet ist, wobei ein Endabschnitt (21) des ersten Koppelteils (11) mit einem längs einer Gewindeachse (2) erstreckten Innengewinde (19) versehen ist und wobei ein Endabschnitt des zweiten Koppelteils (42) mit einem längs der Gewindeachse (2) erstreckten Außengewinde (44) versehen ist, das in das Innengewinde (19) des ersten Koppelteils (11) eingeschraubt ist, wobei an einer Außenoberfläche (22) des Endabschnitts (21) des ersten Koppelteils (11) eine Klemmhülse (23) drehbeweglich aufgenommen ist, wobei eine Innenoberfläche (25) der Klemmhülse (23) und die Außenoberfläche (22) des Endabschnitts (21) des ersten Koppelteils (11) in einer quer zur Gewindeachse ausgerichteten Querschnittsebene jeweils von einer Kreisgeometrie abweichende und zueinander korrespondierende Riegelgeometrien (26, 46, 47, 48) aufweisen, um bei einer Drehbewegung der Klemmhülse (23) gegenüber dem Endabschnitt (21) des ersten Koppelteils (11) eine zumindest bereichsweise elastische oder elastische und plastische Durchmesserveränderung des Endabschnitts (21) des ersten Koppelteils (11) zur Klemmung des Endabschnitts des zweiten Koppelteils (42) zu bewirken, **dadurch gekennzeichnet, dass** an der Innenoberfläche (25) der Klemmhülse (23) zwei Riegelgeometrien (26) ausgebildet sind und wobei an der Außenoberfläche des Endabschnitts (21) des ersten Koppelteils (11) zwei Riegelgeometrien (46, 47, 48) ausgebildet sind, wobei die Riegelgeometrien (26, 46, 47, 48) derart angeordnet sind, dass in einer ersten Funktionsstellung der Klemmhülse (23) gegenüber dem Endabschnitt (21) des ersten Koppelteils (11) nur eine der Riegelgeometrien (26) der Klemmhülse (23) in Eingriff mit einer der Riegelgeometrien (46, 47, 48) des Endabschnitts (21) des ersten Koppelteils (11) steht und dass in einer zweiten Funktionsstellung der Klemmhülse (23) gegenüber dem Endabschnitt (21) des ersten Koppelteils (11) die zwei Riegelgeometrien (26) der Klemmhülse in Eingriff mit den zwei Riegelgeometrien (46, 47, 48) des Endabschnitts (21) des ersten Koppelteils (11) stehen.

2. Koppelanordnung (1) nach Anspruch 1, **dadurch gekennzeichnet, dass** das erste Koppelteil (11) einen Stangenabschnitt (12) und einen Verbindungsabschnitt (13) aufweist, wobei der Endabschnitt (21) des ersten Koppelteils (11) am Verbindungsabschnitt (13) ausgebildet ist und wobei der Verbindungsabschnitt (13) mit einem Außengewinde (17) in ein Innengewinde (15) des Stangenabschnitts (12) eingeschraubt ist..

3. Koppelanordnung (1) nach Anspruch 1, **dadurch gekennzeichnet, dass** die Riegelgeometrien (26) an der Innenoberfläche (25) der Klemmhülse (23) als, vorzugsweise jeweils mit gleicher Winkelerstreckung (27) ausgebildete, insbesondere in gleicher Winkelteilung verteilte, radial nach innen abragende Riegelvorsprünge ausgebildet sind.

4. Koppelanordnung (1) nach Anspruch 3, **dadurch gekennzeichnet, dass** die Riegelgeometrien (46, 47, 48) des Endabschnitts (21) des ersten Koppelteils (11) von Kreisringabschnitten oder von jeweils außenseitig in Richtung des Stangenabschnitts verjüngten Kegelringabschnitten bestimmt werden und mit einem Innengewinde (19) zur Aufnahme des Endabschnitts des zweiten Koppelteils (42) ausgebildet sind.

5. Koppelanordnung (1) nach Anspruch 4, **dadurch gekennzeichnet, dass** die Riegelgeometrien (46, 47, 48) des Endabschnitts (21) des ersten Koppelteils (11) jeweils unterschiedliche Winkelerstreckungen (53, 54, 55) aufweisen.

6. Koppelanordnung (1) nach Anspruch 1, **dadurch gekennzeichnet, dass** die Riegelgeometrien (46, 47, 48) an der Außenoberfläche des Endabschnitts (21) des ersten Koppelteils (11) als, vorzugsweise jeweils mit gleicher Winkelerstreckung (27) ausgebildete, insbesondere in gleicher Winkelteilung verteilte, radial nach außen abragende Riegelvorsprünge (26) ausgebildet sind.

7. Koppelanordnung (1) nach Anspruch 6, **dadurch gekennzeichnet, dass** die Riegelgeometrien (46, 47, 48) an der Innenoberfläche (25) der Klemmhülse (23) als Kreismantelabschnitte ausgebildet sind, zwischen denen längs der Gewindeachse (2) ausgerichtete Nuten ausgebildet sind.

8. Koppelanordnung (1) nach einem der vorhergehenden Ansprüche, **dadurch gekennzeichnet, dass** eine Stirnfläche (32) einer Riegelgeometrie (26) der Klemmhülse (23), insbesondere eines Riegelvorsprungs, und eine korrespondierende Stirnfläche (56, 57, 58) einer Riegelgeometrie (46, 57, 58) des Endabschnitts (21) des ersten Koppelteils (11) einen Endanschlag für eine Rotationsbewegung der Klemmhülse (23) gegenüber dem Endabschnitt (21) des ersten Koppelteils (11) aus der ersten Funktionsstellung in eine Freigabestellung ausbilden.

9. Koppelanordnung (1) nach Anspruch 1, **dadurch gekennzeichnet, dass** am zweiten Koppelteil (42) ein gabelförmiger Befestigungsabschnitt (45) ausgebildet ist und dass an einander entgegengesetzt angeordneten Endabschnitten (21) des ersten Koppelteils (11) jeweils ein zweites Koppelteil (42) angeordnet ist.

## Claims

1. Coupling arrangement (1) for connecting components, with a first coupling part (11) designed to be fixed to a first component, and with a second coupling part (42) designed to be fixed to a second component, wherein an end portion (21) of the first coupling part (11) is provided with an internal thread (19) extending along a thread axis (2) and wherein an end portion of the second coupling part (42) is provided with an external thread (44) extending along the thread axis (2), which is screwed into the internal thread (19) of the first coupling part (11), wherein a clamping sleeve (23) is rotatably received on an outer surface (22) of the end portion (21) of the first coupling part (11), wherein an inner surface (25) of the clamping sleeve (23) and the outer surface (22) of the end section (21) of the first coupling part (11) have, in a cross-sectional plane aligned transversely to the thread axis, locking geometries (26, 46, 47, 48) in order to cause, during a rotary movement of the clamping sleeve (23) relative to the end section (21) of the first coupling part (11), an at least partially elastic or elastic and plastic change in diameter of the end section (21) of the first coupling part (11) for clamping the end section of the second coupling part (42), **characterized in that** two locking geometries (26) are formed on the inner surface (25) of the clamping sleeve (23) and two locking geometries (46, 47, 48) are formed on the outer surface of the end section (21) of the first coupling part (11), wherein the locking geometries (26, 46, 47, 48) are arranged such that that in a first functional position of the clamping sleeve (23) relative to the end section (21) of the first coupling part (11), only one of the locking geometries (26) of the clamping sleeve (23) is in engagement with one of the locking geometries (46, 47, 48) of the end section (21) of the first coupling part (11) and that in a second functional position of the clamping sleeve (23) relative to the end section (21) of the first coupling part (11), the two locking geometries (26) of the clamping sleeve are in engagement with the two locking geometries (46, 47, 48) of the end section (21) of the first coupling part (11.

2. Coupling arrangement (1) according to claim 1, **characterized in that** the first coupling part (11) has a rod section (12) and a connecting section (13), wherein the end section (21) of the first coupling part (11) is formed on the connecting section (13) and wherein the connecting section (13) is screwed with an external thread (17) into an internal thread (15) of the rod section (12).

3. Coupling arrangement (1) according to claim 1, **characterized in that** the locking geometries (26) on the inner surface (25) of the clamping sleeve (23) are designed as locking projections projecting radially inwards, preferably each with the same angular extension (27) and distributed at equal angular intervals.

4. Coupling arrangement (1) according to claim 3, **characterized in that** the locking geometries (46, 47, 48) of the end section (21) of the first coupling part (11) are defined by circular ring sections or by conical ring sections which are each tapered on the outside in the direction of the rod section and are designed with an internal thread (19) for receiving the end section of the second coupling part (42).

5. Coupling arrangement (1) according to claim 4, **characterized in that** the locking geometries (46, 47, 48) of the end section (21) of the first coupling part (11) each have different angular extensions (53, 54, 55).

6. Coupling arrangement (1) according to claim 1, **characterized in that** the locking geometries (46, 47, 48) on the outer surface of the end section (21) of the first coupling part (11) are formed as locking projections (26) projecting radially outwards, preferably each with the same angular extension (27) and distributed in particular at equal angular intervals.

7. Coupling arrangement (1) according to claim 6, **characterized in that** the locking geometries (46, 47, 48) on the inner surface (25) of the clamping sleeve (23) are designed as circular shell sections, between which grooves aligned along the thread axis (2) are formed.

8. Coupling arrangement (1) according to one of the preceding claims, **characterized in that** an end face (32) of a locking geometry (26) of the clamping sleeve (23), in particular of a locking projection, and a corresponding end face (56, 57, 58) of a locking geometry (46, 57, 58) of the end section (21) of the first coupling part (11) form an end stop for a rotational movement of the clamping sleeve (23) relative to the end section (21) of the first coupling part (11) from the first functional position into a release position. Position into a release position.

9. Coupling arrangement (1) according to claim 1, **characterized in that** a fork-shaped fastening section (45) is formed on the second coupling part (42) and that a second coupling part (42) is arranged on each of the end sections (21) of the first coupling part (11) arranged opposite one another.

## Revendications

1. Ensemble de couplage (1) pour relier des éléments de construction, avec une première partie de couplage (11), qui est réalisée pour être fixée sur un premier élément de construction, et avec une deuxième partie de couplage (42), qui est réalisée pour être fixée sur un deuxième élément de construction, dans lequel une section d'extrémité (21) de la première partie de couplage (11) est pourvue d'un filetage intérieur (19) s'étirant le long d'un axe de filetage (2) et dans lequel une section d'extrémité de la deuxième partie de couplage (42) est pourvue d'un filetage extérieur (44) s'étirant le long de l'axe de filetage (2), qui est vissé dans le filetage intérieur (19) de la première partie de couplage (11), dans lequel une douille de serrage (23) est montée de manière mobile en rotation sur une surface extérieure (22) de la section d'extrémité (21) de la première partie de couplage (11), dans lequel une surface intérieure (25) de la douille de serrage (23) et la surface extérieure (22) de la section d'extrémité (21) de la première partie de couplage (11) présentent, dans un plan de section transversal orienté transversalement par rapport à l'axe de filetage, des géométries de verrou (26, 46, 47, 48) différentes respectivement d'une géométrie circulaire et correspondant les unes aux autres pour entraîner, lors d'un mouvement de rotation de la douille de serrage (23) par rapport à la section d'extrémité (21) de la première partie de couplage (11), une modification au moins en partie élastique ou élastique et plastique du diamètre de la section d'extrémité (21) de la première partie de couplage (11) pour le serrage de la section d'extrémité de la deuxième partie de couplage (42), **caractérisé en ce que** deux géométries de verrou (26) sont réalisées sur la surface intérieure (25) de la douille de serrage (23) et dans lequel deux géométries de verrou (46, 47, 48) sont réalisées sur la surface extérieure de la section d'extrémité (21) de la première partie de couplage (11), dans lequel les géométries de verrou (26, 46, 47, 48) sont disposées de telle manière que dans une première position de fonctionnement de la douille de serrage (23) par rapport à la section d'extrémité (21) de la première partie de couplage (11), seule une des géométries de verrou (26) de la douille de serrage (23) est en prise avec une des géométries de verrou (46, 47, 48) de la section d'extrémité (21) de la première partie de couplage (11) et que dans une deuxième position de fonctionnement de la douille de serrage (23) par rapport à la section d'extrémité (21) de la première partie de couplage (11), les deux géométries de verrou (26) de la douille de serrage sont en prise avec les deux géométries de verrou (46, 47, 48) de la section d'extrémité (21) de la première partie de couplage (11).

2. Ensemble de couplage (1) selon la revendication 1, **caractérisé en ce que** la première partie de couplage (11) présente une section de tige (12) et une section de liaison (13), dans lequel la section d'extrémité (21) de la première partie de couplage (11) est réalisée sur la section de liaison (13) et dans lequel la section de liaison (13) est vissée avec un filetage extérieur (17) dans un filetage intérieur (15) de la section de tige (12).

3. Ensemble de couplage (1) selon la revendication 1, **caractérisé en ce que** les géométries de verrou (26) sont réalisées sur la surface intérieure (25) de la douille de serrage (23) en tant que saillies de verrou dépassant radialement vers l'intérieur, réalisées de préférence respectivement avec la même extension angulaire (27), en particulier réparties selon la même répartition angulaire.

4. Ensemble de couplage (1) selon la revendication 3, **caractérisé en ce que** les géométries de verrou (46, 47, 48) de la section d'extrémité (21) de la première partie de couplage (11) sont déterminées par des sections d'anneau circulaire ou par des sections d'anneau conique respectivement effilées côté extérieur en direction de la section de tige et sont réalisées avec un filetage intérieur (19) pour recevoir la section d'extrémité de la deuxième partie de couplage (42).

5. Ensemble de couplage (1) selon la revendication 4, **caractérisé en ce que** les géométries de verrou (46, 47, 48) de la section d'extrémité (21) de la première partie de couplage (11) présentent respectivement des extensions angulaires (53, 54, 55) différentes.

6. Ensemble de couplage (1) selon la revendication 1, **caractérisé en ce que** les géométries de verrou (46, 47, 48) sont réalisées sur la surface extérieure de la section d'extrémité (21) de la première partie de couplage (11) en tant que saillies de verrou (26) dépassant radialement vers l'extérieur, réalisées de préférence respectivement avec la même extension angulaire (27), réparties en particulier selon la même répartition angulaire.

7. Ensemble de couplage (1) selon la revendication 6, **caractérisé en ce que** les géométries de verrou (46, 47, 48) sont réalisées sur la surface intérieure (25) de la douille de serrage (23) en tant que sections de gaine circulaire, entre lesquelles sont réalisées des rainures alignées le long de l'axe de filetage (2).

8. Ensemble de couplage (1) selon l'une quelconque des revendications précédentes, **caractérisé en ce qu'**une surface frontale (32) d'une géométrie de verrou (26) de la douille de serrage (23), en particulier d'une saillie de verrou, et une surface frontale correspondante (56, 57, 58) d'une géométrie de verrou (46, 57, 58) de la section d'extrémité (21) de la première partie de couplage (11) réalisent une butée d'extrémité pour un mouvement de rotation de la douille de serrage (23) par rapport à la section d'extrémité (21) de la première partie de couplage (11) à partir de la première position de fonctionnement dans une position de libération.

9. Ensemble de couplage (1) selon la revendication 1, **caractérisé en ce qu'**une section de fixation en forme de fourche (45) est réalisée sur la deuxième partie de couplage (42) et qu'une deuxième partie de couplage (42) est disposée respectivement sur des sections d'extrémité (21) de la première partie de couplage (11) disposées à l'opposé l'une de l'autre.
